(19) Europäisches Patentamt
European Patent Office
Office européen des brevets

(11) **EP 1 843 276 A1**

(12) **EUROPEAN PATENT APPLICATION**

(43) Date of publication:
**10.10.2007 Bulletin 2007/41**

(51) Int Cl.:
**G06K 9/72** *(2006.01)*

(21) Application number: **07104561.1**

(22) Date of filing: **21.03.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **03.04.2006 EP 06112153**

(71) Applicant: **Océ-Technologies B.V.**
**5914 CC Venlo (NL)**

(72) Inventors:
• **Belitskaya, Alena V.**
**5911 A Venlo (NL)**

• **Faust, Bernardus J.**
**5925 AH Venlo (NL)**
• **Dortmans, Henricus M.J.M.**
**5981 EB Panningen (NL)**

(74) Representative: **van Meeteren, Arend Anthonie**
**Océ-Technologies B.V.**
**Corporate Patents**
**Postbus 101**
**5900 MA Venlo (NL)**

Remarks:
Amended claims in accordance with Rule 86 (2) EPC.

(54) **Method for automated processing of hard copy text documents**

(57)    A method for automated processing of hard copy text documents comprises the steps of:
- scanning the hard copy document,
- subjecting the scanned document to an OCR process, so as to obtain a text file of the text of the document and
- subjecting the text file to a Named Entities (NE) recognition process,

and the NE recognition process comprises a step (S7) of detecting OCR recognition errors in the text file.

*Fig. 1*

EP 1 843 276 A1

## Description

The invention relates to a method for automated processing of hard copy text documents.

More particularly, the invention relates to method for recognition of named entities within a multilingual document text that is heavily degraded by OCR/spelling errors.

The recognition of named Entities in a text file is a well-studied task in the field of electronic processing of natural language. Its objective is to identify the boundaries of certain phrases in a text, which are normally not found in a dictionary of a language, but function as unique identifiers of entities (organisations, persons, locations, etc.), times (dates, times) and quantities (monetary values, percentages, etc.). The named entities may thus by classified as proper names such as "Henry Miller", "New York", "United Nations Organisation"; temporal expressions such as " boundaries of certain phrases in a text, which are normally not found in a dictionary of a July 1, 2005", "11.30 a.m.", and numerical expressions such as "100 km/h", "52,48 $/barrel" and the like. The recognition and classification of such named entities in a text file provides useful information for many other tasks in the field of automated text and document processing, including, for example, spelling check and spelling correction, template filling, automated generation of a digest or a list of catchwords for document retrieval, search engines and the like, categorisation and classification of documents, and many more. As a representative example, one may think of the task of anonymizing a document, e.g., a court decision, by detecting and replacing the names of persons, companies and the like, in order to protect the privacy of the parties involved.

Methods of Named Entity recognition, which are discussed, for example, by D. Palmer, D. Day, "A Statistical Profile of the Named Entity Task", Proceedings of the Fifth Conference on Applied Natural Language Processing, Washington, D.C., March 31-April 3, 1997 and by Andrei Mikheev, Marc Moens and Claire Grover, "Named Entity Recognition without Gazetteers, in Proceedings of EACL'99, Bergen, Norway, 1999, pp. 1-8, are based on at least one or, more preferably, a combination of two fundamental approaches: reference to patterns and reference to gazetteers.

The pattern-based approach takes advantage of the fact that many named entities can be recognised by means of a characteristic pattern occurring either in the named entity phrase itself or in the context thereof. For example, characteristic patterns for names of persons are "Mrs. Xxxx" or "Mr. Xxxx X. Xxxx" as in "Mrs. Robinson" or "Mr. Richard K. Lee", or patterns including a title such as "President John F. Kennedy" or "Professor Max von Laue". Typical patterns for company names are "Xxxx B.V.", "Xxxx GmbH" or "Xxxx Ltd.".

Named Entities may also be recognised by reference to characteristic patterns in their context. For example, phrases like "my name is ..." or "name: ..." indicate that the expression following to this phrase will be a name of a person. A context phrase like "Xxxx, chairman of Yyyy" will indicate that "Xxxx" is a name of a person and "Yyyy" is a name of a company or organisation.

A gazetteer is a list of phrases that are known to designate named entities. Thus, a named entity appearing in a text file can be recognised by checking whether a phrase appearing in the text file matches with a phrase that is listed in one or more gazetteers. Of course, the comprehensiveness of the gazetteers and the selection of named entities included therein will depend on the specific field of application. For example, when processing political newspaper articles, it will be useful to have a gazetteer which includes the names of all countries and major cities all over the world, names of well known politicians, and the like. In the field of scientific literature, a useful gazetteer would include the names of famous scientists and scientific organisations.

A powerful algorithm for NE recognition will combine these two approaches and may employ dynamic or self-learning gazetteers. For example, once a named entity such as "Fischer & Krecke GmbH" has been identified as a company name because of its characteristic pattern, the phrase "Fischer & Krecke" may automatically be added to a gazetteer for company names, so that, when "Fischer & Krecke" is later found in the same document or another document, it can be recognised as a company name even if it does not fit into the pattern, i.e. is not accompanied by the expression "GmbH".

In many practical applications, the text file that is to be subjected to NE recognition will be a text file that has been created electronically on a computer. It is possible, however, that NE recognition is also employed or should be employed in a document processing workflow, wherein the text documents are originally presented in the form of hard copies which have to be scanned-in and then have to be subjected to an Optical Character Recognition (OCR) process in order to obtain a text file to which NE recognition can be applied. Then, the results of NE recognition may be utilised, for example, for distributing the documents further to their respective destinations, either as hard copies or in electronic form, for archiving the documents or for creating new hard copies of soft copy documents by changing the original text, e.g., in order to anonymize the same.

AZZABOU N et al.: "Neural network-based proper names extraction in fax images" PATTERN RECOGNITION, 2004, ICPR 2004. PROCEEDINGS OF THE 17TH INTERNATIONAL CONFERENCE ON PATTERN RECOGNITION, CAMBRIDGE, UK AUG. 23-26, 2004, PISCATAWAY, NJ, USA, IEEE vol. 1, 23 August 2004 (2004-08-23), pages 412-424, discloses a method comprising the steps of:

- scanning a hard copy document,
- subjecting the scanned document to an OCR process, so as to obtain a text file of the text of the document,
- subjecting the nouns and proper nouns in the text file to a Named Entities (NE) recognition process which includes a step of detecting OCR recognition errors by calculating a similarity measure (k) for a string of the text file and a corresponding string in a gazetteer and identifying the two strings with one another if their similarity measure exceeds a predetermined threshold value.

In this document, the task is to identfy a sender's name in a fax cover page, so that the NE recognition may be limited to a sender's address field on the cover page, which field may be detected by means of a layout analysis.

US 2004/117192A1 and WO 97/38394 A disclose similar methods for identifying an address in an address block of a letter.

The invention aims at the more ambitious task of detecting named entities of any type in the full text of a scanned document.

It is accordingly an object of the invention to provide a method for automated document processing which includes NE recognition and is particularly suited for non-standardised documents that have originally been presented as hard copies and are degraded by OCR recognition errors.

The method according to the invention is specified in claim 1.

The invention particularly addresses the problem that an OCR process frequently produces recognition errors, so that, in the electronic text file, some of the phrases that should be recognised as named entities will be misspelled, due to OCR recognition errors, and will therefore not be recognized as named entities in standard NE recognition routines, e.g. by reference to a gazetteer.

In the method according to the invention, the phrases to be inspected are not just analysed as they appear in the text file, but the possibility that these phrases are misspelled due to OCR recognition errors, is taken into account, and phrases are recognized as named entities even they are only similar to but not identical with the patterns and/or phrases that are characteristic for the named entities to be detected.

Thus, the reliability of the NE recognition process is improved significantly in cases where the text file is "damaged" by OCR recognition errors. In this context, the "reliability" of the NE recognition is quantified by two measures which are known as "recall" and "precision". Recall is the percentage of correct named entities that the process has identified, in relation to the total number of named entities that should have been found (as determined by human intervention). Precision is the percentage of those phrases that have been correctly identified (i.e. that actually are true named entities), in relation to the number of phrases that have (correctly or incorrectly) been identified as named entities. The step of detecting NEs with OCR/spelling errors according to the invention will particularly improve the recall, because it increases the number of phrases that, in spite of being misspelled, can be recognized as patterns or can be found in a gazetteer.

However, under certain circumstances, the detection of NEs with OCR/spelling errors may also improve the precision of the process.

It should be observed that the above-mentioned article of Mikheev et al. describes already an example where an NE process successfully identifies the OCR-damaged expression "U7ited States" in the phrase "U7ited States and Russia" as a named entity (location). However, this recognition is only due to an algorithm which concludes from the fact that "Russia" was identified as a named entity and "U7ited States" and "Russia" are linked by the conjunction "and", that U7ited States" must also be the name of a location. It is not proposed in this document to provide a specific step for checking whether the sequence of characters "U7ited States" could be the result of an error in the OCR recognition of the original string "United States".

For comparison, consider the phrase: "I have been to Rhodos and Ilike the Greek islands." Here, the algorithm described above would identify "Rhodos" and "Ilike" as named entities (names of two Greek islands). A check for OCR errors would have shown that, most probably, the original text was: "I have been to Rhodos and I like the Greek islands." This example also illustrates how the detection of OCR errors can improve the precision.

According to the invention, the text file resulting from the OCR process is POS-tagged before or within the NE recognition process. There are a set of well-known algorithms to identify the morphological category of word (so called POS (Part Of Speech) tags) in a prsented text. Examples of such categories are verbs, articles, prepositions, ordinary nouns such as "house" or "garden" and proper nouns such as "Peter" or "Smith". The proper nouns, which are labelled by the tag "/NNP", are of particular interest here, because they are likely to be or form part of named entities. Thus, the subsequent NE process may focus onto those phrases that are composed of character strings that have been tagged with "/NNP". In this way, the required amount of data processing is reduced significantly.

In a particularly preferred embodiment of the invention, in order to limit the amount of processing to be performed, the NE recognition process comprises a first substep attempting to identify named entities by pattern analysis, a second substep attempting to identify named entities by reference to gazetteers (without taking possible OCR errors into account), and a third substep in which those proper nouns (or phrases composed of proper nouns), which have not been identified as named entities in the preceding substeps, are analysed once again, but this time in consideration of possible OCR errors. In the simplest case, the third step evaluates a similarity between the phrases in the text file and those in the gazetteers, and if the similarity is above a certain threshold, the pertinent phrase from the text file is recognized as a named entity.

It is preferable that named entities, misspelled or spelled correctly, that have been identified in the first substep by reference to patterns, are automatically entered into a gazetteer. Then, if the text file includes further occurrences, misspelled or not, of the same named entity, this named entity may be identified by reference to the gazetteer in the third substep.

In a more elaborated embodiment, detection of OCR errors may also be involved in the pattern analysis, i.e. the phrases that still remain to be analysed and/or the context thereof are checked for similarity with the predefined patterns that indicate named entities. It is also possible that the NE recognition step includes a step of checking all the words in the text file (or at least all the words in the context of possible named entities) for OCR errors, in order to improve the accuracy of a subsequent step of morphological analysis, such as POS tagging, which will then reveal the candidates for named entities with higher precision.

When all the substeps of the NE recognition process has been completed, it may left to the option of the user whether he wants to correct the misspelled named entities in the text file or whether he wants to leave them misspelled (but identified correctly).

What is required for detecting and possibly correcting OCR recognition errors is a suitable measure for evaluating the similarity between character strings of equal or approximately equal length. A number of known measures for that purpose are described in an article by Grzegorz Kondrak in "Identification of Confusable Drug Names: A new Approach and Evaluation Methodology", proceedings of COLING, Geneva, Switzerland, 2004.

A simple measure is obtained just by counting the number of equal characters in the two strings and then dividing the sum by the length of these strings. If the strings have different length, the sum can be divided either by the average length or by the length of the longer string. For example, the strings "pat" and "tap" have three identical characters, so that the similarity measure would be 1, i.e., identity, if the order in which the characters appear in the strings is disregarded. As an alternative, it may be required that the characters appear in the same order in both strings (the so-called "no crossing-links constraint"). Then, "pat" and "tap" would have only one character ("a") in common, so that the similarity measure would only be 1/3.

A more general measure is obtained by counting the number of equal n-grams in the strings. An n-gram is a sequence of n adjacent characters in the order in which they appear in the strings. If n is > 2, it may be desirable to increase the weight of the first and last characters in the strings, for example by adding blank segments before the first character and/or behind the last character of each string, these blank segments forming n-grams with the first and the last character, so that these characters will participate in as many n-grams as the internal characters of the string. Moreover, instead of distinguishing only between identity and non-identity of two n-grams, it is possible to assign a weight to each pair of n-grams, in accordance with the similarity or dissimilarity of the two of them.

It was found that the similarity measures that are known as "BI-SIM" and "TRI-SIM" are particularly suited for detecting NEs with OCR/spelling errors. These measures are described in the article of Kondrak and have been developed for the purpose of detecting and evaluating the amount of confusibility between drug names. BI-SIM is based on the similarity of bi-grams or 2-grams (n = 2) with the no-crossing-links constraint enforced and with addition of a blank segment in front of each string. TRI-SIM is the equivalent thereof for n = 3.

Useful details and further developments of the invention are indicated in the dependent claims.

In general, the available algorithms for POS tagging are language specific. In a multilingual text, it is therefore convenient to first determine the language that is predominant in the text and then to select a POS algorithm for that language. Optionally, the step of determining the language or languages or the predominant language may be included in the OCR process.

The method according to the invention is particularly well suited for multi-lingual texts, because most named entities are language-independent or are at least homologous to one another in different languages. For example, the English language name "Rome" of the Italian capital is homologous to the Italian name "Roma", so that the process of detecting OCR recognition errors is capable of identifying these two names with one another. Thus, "Roma" can be recognized as a named entity if "Rome" is found in a gazetteer.

An embodiment example of the invention will now be described in conjunction with the drawings, wherein:

Fig. 1     is a flow diagram illustrating the method according to the invention;

Fig. 2     is an image of a text document to which the method according to the invention is to be applied;

Fig. 3     shows a text file corresponding to the document of Fig. 2 and obtained in step S2 in Fig. 1;

Fig. 4     shows the text file obtained in step S4 in Fig. 1;

Fig. 5     shows the text file obtained in step S5 in Fig. 1;

Fig. 6     shows the text file obtained in step S6 in Fig. 1;

Fig. 7    shows the text file obtained in step S7 in Fig. 1; and

Fig. 8    is a diagram explaining the construction of a BI-SIM similarity measure.

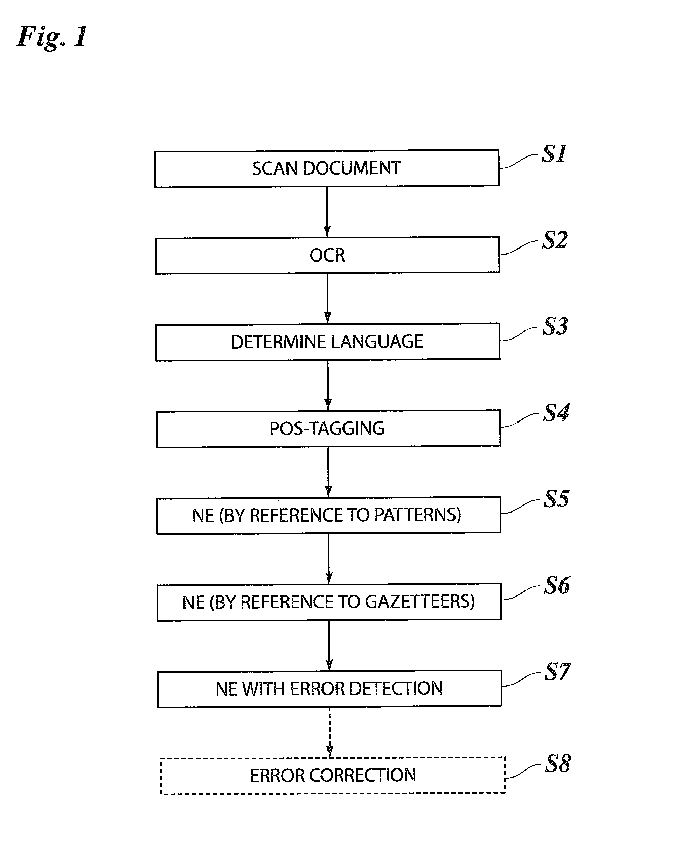

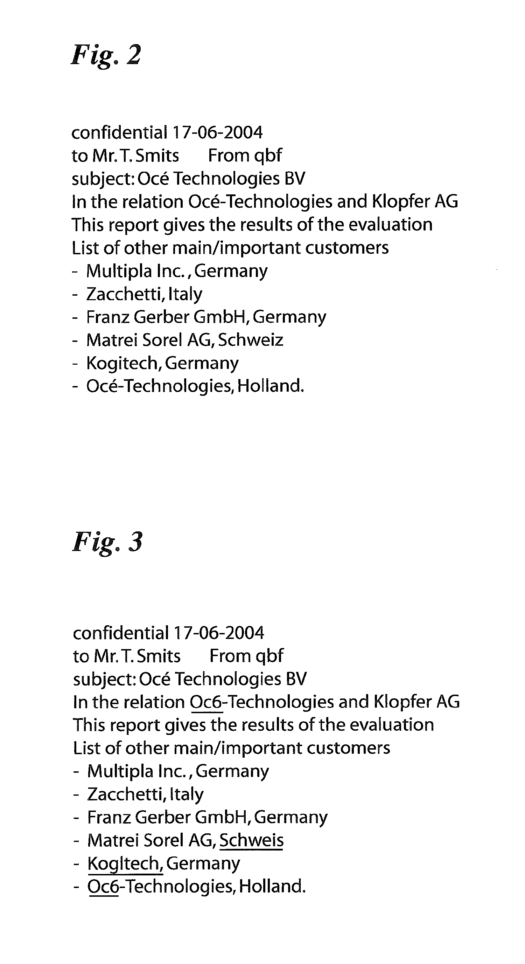

As is shown in Fig. 1, a hard copy text document, the one shown in Fig. 2 for example, is scanned in Step S1. The result is an electronic file, e.g. a bitmap, representing the image on the hard copy document. Then, in step S2, this image is subjected to a known OCR process, which results in a text file as shown in Fig. 3.

Frequently, especially when the quality of the image on the hard copy document is poor, the OCR process leads to recognition errors. Examples of such errors have been underlined in Fig. 3. For example, the company name "Océ" has not been recognized correctly and is sometimes misspelled as "Oc6" in the text file. Similarly, the name "Schweiz", which is the German language name of the country Switzerland, has been misspelled as "Schweis". In the company name "Kogitech", the letter "i" has erroneously been recognized as a "l".

In general, the language in which the text has been written is not known beforehand, and the document may also be multi-lingual. This is why the language of the text or, in case of a multi-lingual text, the languages or the language that is predominant in the text are determined in step S3 in Fig. 1. Optionally, this step may be integrated in the OCR-step S2 and may then also be used for checking the words, that have been recognized, against a dictionary for the pertinent language, so as to improve the precision of the OCR process. It should be observed however that such a check will not improve the precision in the recognition of named entities, since the names of such entities are not normally found in a dictionary.

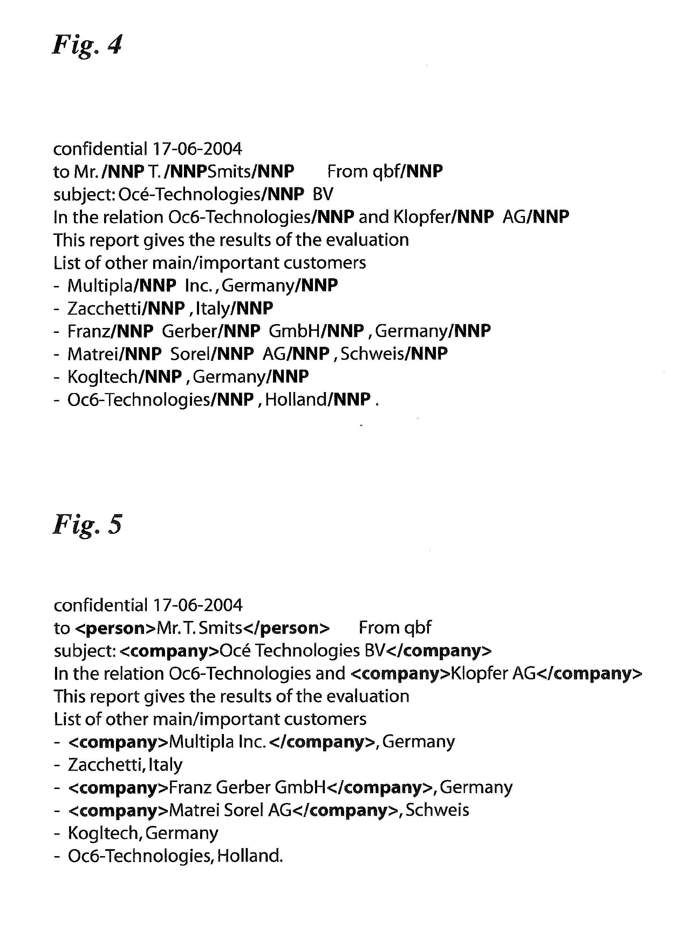

In step S4, the text file is POS-tagged (Part Of Speech tagging). The result is shown in Fig. 4. In general, a POS algorithm assigns a specific tag to each character string in the text file, depending on the (assumed) grammatical function of the string. However, since the detection of named entities focuses on proper nouns or proper names, Fig. 4 shows only the tags "/NNP" that have been assigned to such proper nouns.

Since the POS tagging algorithm depends on the grammatical structure of the language of the text, it is based on the language that has been determined in step S3. It is possible to determine different languages for different parts of the text. In many cases, however, one language will be predominant in the text (English in the example that is considered here), so that acceptable results are obtained if the POS-tagging is based on the predominant language only.

The subsequent steps S5, S6 and S7 in Fig. 1 implement the core of a Named Entity recognition process which seeks to identify and classify the strings that have been tagged with /NNP, and phrases composed of such strings, as named entities.

Step S5 is a first substep of the NE process, which attempts to identify the proper nouns or proper noun phrases by reference to characteristic patterns in the phrases themselves or in the context thereof. The result is illustrated in Fig. 5.

For example, it can be seen that the phrase "Mr. T. Smith" has been identified as a named entity, i.e. the name of a person, based on the pattern including the token "Mr.". The start of the named entity phrase is indicated by a mark "<person >", and the end of the phrase is marked by "</person", wherein the word "person" classifies the named entity as the name of a person. Similarly, as is shown in the third line in Fig. 5, the phrase "Océ Technologies B.V." (wherein Océ is not misspelled) has been identified as a company name. However, in the fourth line in Fig. 5, the process has failed to detect the phrase "OC6 Technologies" as a company name, not only because "Océ" has been misspelled, but also because the characteristic pattern feature "B.V." is missing here. Other company names which include characteristic pattern features such as "AG", "Inc." or "GmbH", have been identified correctly. On the other hand, some company names such as "Zacchetti", have not been identified in step S5, because they do not fit into a characteristic pattern.

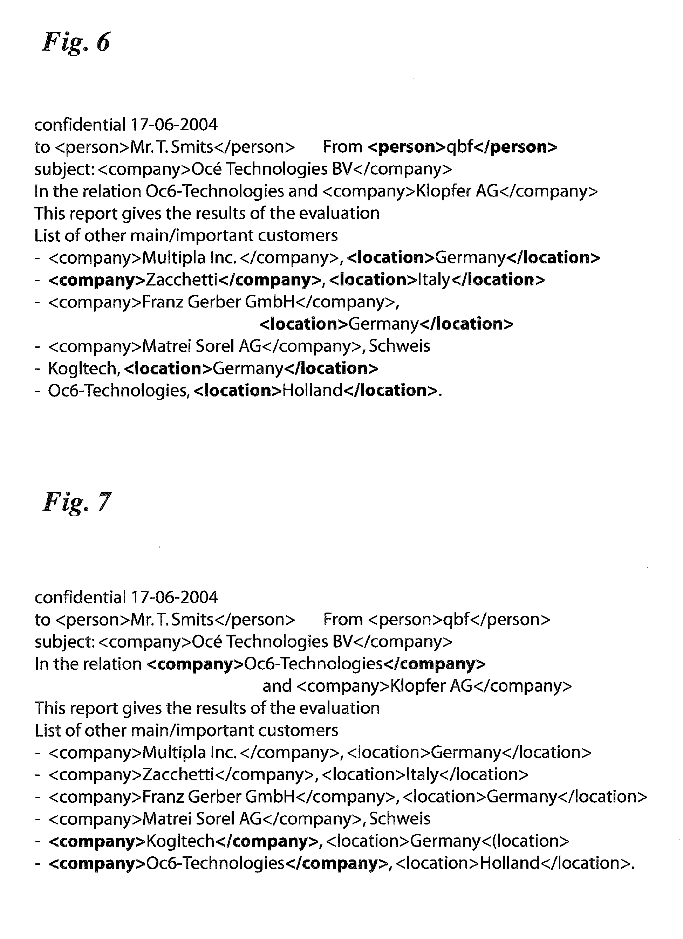

This is why, in the next substep, step S6, the text file is gone through once again, and the proper nouns and proper noun phrases that have not yet been identified as named entities are checked against one or more gazetteers which list known named entities together with their respective categories. The result of this step is illustrated in Fig. 6, which shows that, now, "Zacchetti" could be identified as a company name by reference to a gazetteer. Similarly, in the second line of the text, the abbreviation "qbf" could be identified as the name of a person, also by reference to a gazetteer. Likewise, the names of countries such as "Germany", "Italy" and "Holland" are correctly identified as named entities referring to locations.

It should be observed that, in step S6, a phrase is only identified as a named entity when there is absolute identity between the phrase in the text file and a phrase appearing in at least one of the gazetteers. For this reason, the misspelled company names "Oc6 Technologies" and "Kogltech" have not been identified in step S6, nor has the misspelled country name "Schweis".

In order to make the process more robust against misspelled words, resulting particularly from OCR recognition errors, a substep S7 has been added, which, in the simple example described here, attempts again to identify named entities by reference to gazetteers, but this time in combination with the detection of OCR recognition errors. More precisely, the phrases from the text file, that are being analysed, are compared to phrases in the gazetteers, and a similarity measure is assigned to each pair of phrases and/or to each pair of words that form part of these phrases. If the similarity measure between a given pair of words or phrases is above a certain threshold level, then the phrase in the text file is identified as the named entity. For example, there is a high level of similarity between the character strings "Océ" and "Oc6", and as a result, phrase "Oc6-Technologies" is now correctly identified as a company name. Likewise "Kogltech" is identified as a company name because of its similarity with the word "Kogitech" that is found in a gazetteer. Thus, as shown in Fig. 7, the step S7 results in a significantly improved reliability in the detection of the named entities appearing in the text file.

Then, optionally, a correction step S8 may be performed, in which the misspelled named entities (such as "Oc6") are replaced by their correct versions ("Océ").

A possible application of the method that has been described above is the task to anonymize a text. For example, the text shown in Fig. 2 includes sensitive information about a company (Océ-Technologies) and some of its business partners and should therefore be anonymized, i.e., the names of persons and companies and possibly also the locations should be replaced by neutral, non-disclosing names. Since the named entities have been detected with high reliability, the process of replacing these named entities can now be automated. In that case, it is of course unnecessary to correct the OCR recognition errors, since the misspelled expressions will be replaced, anyway.

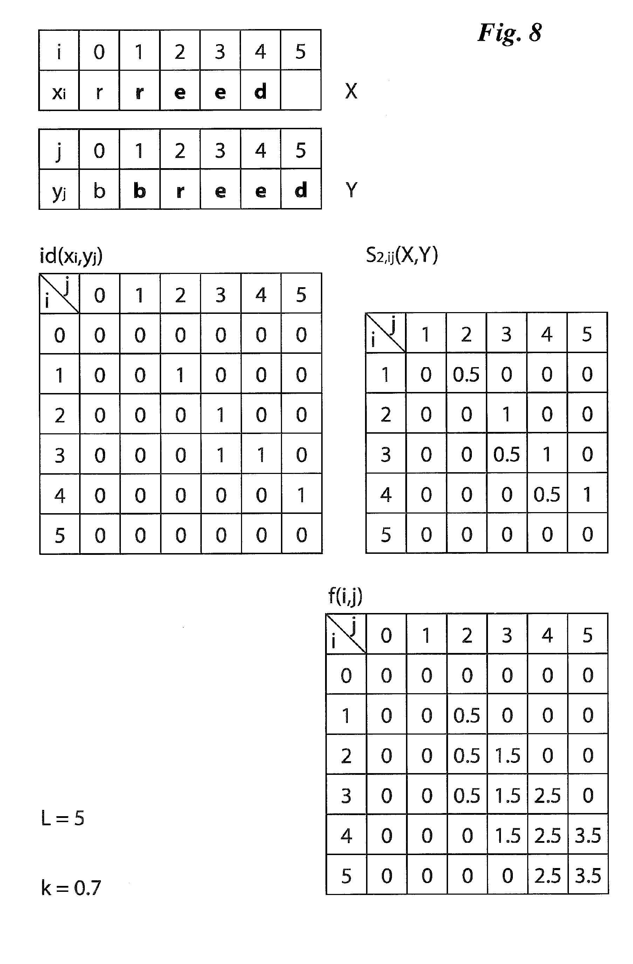

An example of a similarity measure, which is called BI-SIM and which is particularly well suited for detecting OCR recognition errors, will now be described in conjunction with Fig. 8.

By way of example, the similarity between two character strings X = reed and Y = breed shall be evaluated. Since the word "reed" has four characters, the string X has the length $Lx = 4$. The characters of the string X are designated as $x_i$ ($i = 0, ..., 4$), wherein $x_0 = x_1$, i. e. $x_0$ is a copy of the first character and is added in front of the string. Similarly, the string Y has the length $Ly = 5$, and its characters are designated as $y_j$ ($j = 0, ..., 5$), with $y_0 = y_1$. The purpose of adding a copy of the first character (rather than a blank space) at the front of each string is to favor words that have the same first character.

A function id $(x_i, y_j)$ has the value "1" if $xi = y_j$ and the value "0", otherwise. Fig. 8 shows the values of this function for the strings X and Y in matrix form. Since we are only interested in identities between characters of the two strings that appear in identical or at least neighbouring positions, all off-diagonal elements in the matrix, except those in the two first sub-diagonals, may be set to zero.

By definition, an n-gram is an ordered subset of n characters in the string X or Y. Thus, for example, the first 2-gram in X (reed) will be "rr" , and the second 2-gram in X will be "re".

A similarity measure $S_{n,ij}$ (X,Y) for n-grams can now be defined as follows:

$$S_{n,ij}(X,Y) = (1/n) \sum_{k=0}^{n} id(x_{i-k}, y_{j-k})$$

This measure describes the similarity between an n-gram which ends in the position i in the string X and a n-gram which ends in the position j in the string Y. By way of example, Fig. 8 shows, again in matrix form, the values of the similarity measure $S_{2,ij}$ (X, Y). Since i and j now designate only the end positions of the 2-grams (pairs), i runs from 1 to 4 (all $S_{2,5j}$ are zero), and j runs from 1 to 5. The BI-SIM similarity measure can now be defined by the following recurrence:

$$k = f(L, L)/L$$

with:

$$L = \max(Lx, Ly)$$

and

$$f(i,j) = \max[f(i-1, j), f(i, j-1), f(i-1, j-1) + S_{2,ij}(X,Y)]$$

$$f(i,j) = 0, \quad \text{if } i = 0 \text{ or } j = 0$$

Fig. 8 shows the values of the function $f(i,j)$ in matrix form. Again, all off-diagonal matrix elements, except those in the first two sub-diagonals, may be set to zero. Further, the recurrence breaks off when i and j are equal to the length L of the longer one of the two strings.

In the example shown, L is 5, and f (L,L) is f (5,5) is 3.5, which gives k = 0.7.

It is observed that the similarity of 0.7 between "reed" and "breed" is relatively high, even though these strings have only a single character in common (the "e" in the third position). The reason is that the maximum function (max) in the recurrence makes the measure sensitive to similarities between sub-strings that are shifted relative to one another by only one segment (such as the sub-string "reed" in the words "reed" and "breed").

In general, k has values ranging from 0.0 - 1.0, and the value 1.0 is only reached when the two strings are absolutely identical.

Thus, two strings which differ in their length by at most one character can be identified with one another if their similarity measure exceeds a certain threshold value (< 1) and this threshold value can be selected such that words of any length, that are misspelled due to an OCR recognition error, can be identified with their correct versions with considerably high recall and precision.

In a modified embodiment, the similarity measure TRI-SIM may be used, which is constructed in analogy to BI-SIM, but with n = 3 and with two copies of the first character being added in front of each string.

According to yet another modification, the similarity measure $S_{n,ij}$ for n-grams may be replaced by a similarity measure which is derived experimentally by determining the frequency of confusion between all possible n-grams in a typical OCR process. For example, in an OCR process, the single character (1-gram) "m" and the pair of characters (2-gram) "rn" are likely to be confused. It is therefore attractive to have a similarity measure which can compare not only 2-grams to 2-grams but also 2-grams to 1-grams. Since the measure BI-SIM, as described above, has been constructed to be tolerant against shifts of the characters by one segment, the construction principle of BI-SIM can well be adapted to the use of such 1-2-gram similarity measures that are specifically tailored to the detection of OCR errors.

**Claims**

1. Method for automated processing of hard copy text documents, comprising the steps of:

   - scanning the hard copy document,
   - subjecting the scanned document to an OCR process, so as to obtain a text file of the text of the document and
   - subjecting the text file to a Named Entities (NE) recognition process,

   **characterised in that** the NE recognition process comprises a step (S7) of detecting OCR recognition errors in the text file.

2. The method according to claim 1, wherein the text documents are multi-lingual.

3. The method according to claim 1 or 2, comprising a step (S4) of POS-tagging prior to or in the NE recognition process.

4. The method according to any of the preceding claims, wherein the NE recognition process comprises a substep (S5) of detecting named entities by reference to patterns.

5. The method according to any of the preceding claims, wherein the NE recognition process comprises a substep (S6) of detecting named entities by reference to at least one gazetteer.

6. The method according to claim 4 or 5, wherein the step (S7) of detecting OCR recognition errors is performed as a final substep in the NE recognition process and is combined with another NE recognition in the light of possible OCR recognition errors.

7. The method according to any of the preceding claims, wherein the step of detecting OCR recognition errors comprises a step of calculating a similarity measure (k) for a string of the text file and a corresponding string in a gazetteer, and identifying the two strings with one another if their similarity measure exceeds a predetermined threshold value.

8. The method according to claim 7, wherein the similarity measure is based on n-grams with n = 2-3, which enforces a no-crossing-links constraint.

9. The method according to claim 8, where the similarity measure is BI-SIM or TRI-SIM.

10. A computer program product comprising program code in computer-readable form, said program code being adapted to cause, when run on a computer, the computer to perform the method according to any of the claims 1 to 9.

**Amended claims in accordance with Rule 86(2) EPC.**

**1.** Method for automated processing of hard copy text documents, comprising the steps of:

- scanning the hard copy document,
- subjecting the scanned document to an OCR process, so as to obtain a text file of the text of the document,
- POS-tagging the text file to identify nouns and proper nouns (NNP) therein,
- subjecting the nouns and proper nouns in the text file to a first Named Entities (NE) recognition process (S5, S6), and
- subjecting the nouns and proper nouns in text file that have not been identified as named entities in the first NE recognition process to a second NE recognition process (S7) which includes a step of detecting OCR recognition errors by calculating a similarity measure (k) for a string of the text file and a corresponding string in a gazetteer and identifying the two strings with one another if their similarity measure exceeds a predetermined threshold value, wherein the similarity measure is based on n-grams with n = 2-3, which enforces a no-crossing-links constraint.

**2.** The method according to claim 1, wherein the text documents are multi-lingual.

**3.** The method according to any of the preceding claims, wherein the first NE recognition process comprises a substep (S5) of detecting named entities by reference to patterns.

**4.** The method according to any of the preceding claims, wherein the first NE recognition process comprises a substep (S6) of detecting named entities by reference to at least one gazetteer.

**5.** The method according to any of the preceding claims, where the similarity measure is BI-SIM or TRI-SIM.

**6.** A computer program product comprising program code in computer-readable form, said program code being adapted to cause, when run on a computer, the computer to perform the method according to any of the claims 1 to 5.

*Fig. 1*

```
SCAN DOCUMENT                          S1

        ↓

OCR                                    S2

        ↓

DETERMINE LANGUAGE                     S3

        ↓

POS-TAGGING                            S4

        ↓

NE (BY REFERENCE TO PATTERNS)          S5

        ↓

NE (BY REFERENCE TO GAZETTEERS)        S6

        ↓

NE WITH ERROR DETECTION                S7

        ↓

ERROR CORRECTION                       S8
```

*Fig. 2*

confidential 17-06-2004
to Mr. T. Smits     From qbf
subject: Océ Technologies BV
In the relation Océ-Technologies and Klopfer AG
This report gives the results of the evaluation
List of other main/important customers
- Multipla Inc., Germany
- Zacchetti, Italy
- Franz Gerber GmbH, Germany
- Matrei Sorel AG, Schweiz
- Kogitech, Germany
- Océ-Technologies, Holland.

*Fig. 3*

confidential 17-06-2004
to Mr. T. Smits     From qbf
subject: Océ Technologies BV
In the relation Oc6-Technologies and Klopfer AG
This report gives the results of the evaluation
List of other main/important customers
- Multipla Inc., Germany
- Zacchetti, Italy
- Franz Gerber GmbH, Germany
- Matrei Sorel AG, Schweis
- Kogltech, Germany
- Oc6-Technologies, Holland.

*Fig. 4*

confidential 17-06-2004
to Mr. **/NNP** T. **/NNP**Smits**/NNP**       From qbf**/NNP**
subject: Océ-Technologies**/NNP**  BV
In the relation Oc6-Technologies**/NNP** and Klopfer**/NNP**  AG**/NNP**
This report gives the results of the evaluation
List of other main/important customers
- Multipla**/NNP**  Inc., Germany**/NNP**
- Zacchetti**/NNP** , Italy**/NNP**
- Franz**/NNP**  Gerber**/NNP**  GmbH**/NNP** , Germany**/NNP**
- Matrei**/NNP**  Sorel**/NNP**  AG**/NNP** , Schweis**/NNP**
- Kogltech**/NNP** , Germany**/NNP**
- Oc6-Technologies**/NNP** , Holland**/NNP** .

*Fig. 5*

confidential 17-06-2004
to **<person>**Mr. T. Smits**</person>**       From qbf
subject: **<company>**Océ Technologies BV**</company>**
In the relation Oc6-Technologies and **<company>**Klopfer AG**</company>**
This report gives the results of the evaluation
List of other main/important customers
- **<company>**Multipla Inc. **</company>**, Germany
- Zacchetti, Italy
- **<company>**Franz Gerber GmbH**</company>**, Germany
- **<company>**Matrei Sorel AG**</company>**, Schweis
- Kogltech, Germany
- Oc6-Technologies, Holland.

## Fig. 6

confidential 17-06-2004
to <person>Mr. T. Smits</person>     From **<person>qbf</person>**
subject: <company>Océ Technologies BV</company>
In the relation Oc6-Technologies and <company>Klopfer AG</company>
This report gives the results of the evaluation
List of other main/important customers
- <company>Multipla Inc. </company>, **<location>Germany</location>**
- **<company>Zacchetti</company>**, **<location>Italy</location>**
- <company>Franz Gerber GmbH</company>,
                              **<location>Germany</location>**
- <company>Matrei Sorel AG</company>, Schweis
- Kogltech, **<location>Germany</location>**
- Oc6-Technologies, **<location>Holland</location>**.

## Fig. 7

confidential 17-06-2004
to <person>Mr. T. Smits</person>     From <person>qbf</person>
subject: <company>Océ Technologies BV</company>
In the relation **<company>Oc6-Technologies</company>**
                              and <company>Klopfer AG</company>
This report gives the results of the evaluation
List of other main/important customers
- <company>Multipla Inc. </company>, <location>Germany</location>
- <company>Zacchetti</company>, <location>Italy</location>
- <company>Franz Gerber GmbH</company>, <location>Germany</location>
- <company>Matrei Sorel AG</company>, Schweis
- **<company>Kogltech</company>**, <location>Germany<(location>
- **<company>Oc6-Technologies</company>**, <location>Holland</location>.

**Fig. 8**

| i | 0 | 1 | 2 | 3 | 4 | 5 |
|---|---|---|---|---|---|---|
| xi | r | **r** | **e** | **e** | **d** | |

X

| j | 0 | 1 | 2 | 3 | 4 | 5 |
|---|---|---|---|---|---|---|
| yj | b | **b** | **r** | **e** | **e** | **d** |

Y

id(xi,yj)

| i \ j | 0 | 1 | 2 | 3 | 4 | 5 |
|---|---|---|---|---|---|---|
| 0 | 0 | 0 | 0 | 0 | 0 | 0 |
| 1 | 0 | 0 | 1 | 0 | 0 | 0 |
| 2 | 0 | 0 | 0 | 1 | 0 | 0 |
| 3 | 0 | 0 | 0 | 1 | 1 | 0 |
| 4 | 0 | 0 | 0 | 0 | 0 | 1 |
| 5 | 0 | 0 | 0 | 0 | 0 | 0 |

$S_{2,ij}(X,Y)$

| i \ j | 1 | 2 | 3 | 4 | 5 |
|---|---|---|---|---|---|
| 1 | 0 | 0.5 | 0 | 0 | 0 |
| 2 | 0 | 0 | 1 | 0 | 0 |
| 3 | 0 | 0 | 0.5 | 1 | 0 |
| 4 | 0 | 0 | 0 | 0.5 | 1 |
| 5 | 0 | 0 | 0 | 0 | 0 |

f(i,j)

| i \ j | 0 | 1 | 2 | 3 | 4 | 5 |
|---|---|---|---|---|---|---|
| 0 | 0 | 0 | 0 | 0 | 0 | 0 |
| 1 | 0 | 0 | 0.5 | 0 | 0 | 0 |
| 2 | 0 | 0 | 0.5 | 1.5 | 0 | 0 |
| 3 | 0 | 0 | 0.5 | 1.5 | 2.5 | 0 |
| 4 | 0 | 0 | 0 | 1.5 | 2.5 | 3.5 |
| 5 | 0 | 0 | 0 | 0 | 2.5 | 3.5 |

$L = 5$

$k = 0.7$

**European Patent Office**

## EUROPEAN SEARCH REPORT

Application Number

EP 07 10 4561

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AZZABOU N ET AL: "Neural network-based proper names extraction in fax images" PATTERN RECOGNITION, 2004. ICPR 2004. PROCEEDINGS OF THE 17TH INTERNATIONAL CONFERENCE ON CAMBRIDGE, UK AUG. 23-26, 2004, PISCATAWAY, NJ, USA,IEEE, vol. 1, 23 August 2004 (2004-08-23), pages 421-424, XP010724277 ISBN: 0-7695-2128-2 | 1-7,10 | INV. G06K9/72 |
| Y | Section 2 | 8,9 | |
| D,Y | G. KONDRAK, B. DORR: "Identification of Confusable Drug Names: A New Approach and Evaluation Methodology" PROCEEDINGS OF COLING 2004, August 2004 (2004-08), pages 952-958, XP002398000 Geneva, Switzerland Sections 2 and 4 | 8,9 | |
| X | US 2004/117192 A1 (MILETZKI UDO) 17 June 2004 (2004-06-17) * abstract; figure 1 * * paragraphs [0006] - [0008], [0014], [0025], [0028], [0029] * | 1-7,10 | TECHNICAL FIELDS SEARCHED (IPC) G06K G06F |
| X | WO 97/38394 A (SIEMENS AKTIENGESELLSCHAFT; BLOCK, HANS-ULRICH; BRUECKNER, THOMAS) 16 October 1997 (1997-10-16) * abstract; figures 1,2 * * page 5 - page 6 * | 1-7,10 | |

-/--

The present search report has been drawn up for all claims

| Place of search | Date of completion of the search | Examiner |
|---|---|---|
| The Hague | 14 May 2007 | Alecu, Teodor Iulian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**European Patent Office**

**EUROPEAN SEARCH REPORT**

Application Number

EP 07 10 4561

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ANGELO DALLI: "An Internet-Based Method for Verification of Extracted Proper Names" COMPUTATIONAL LINGUISTICS AND INTELLIGENT TEXT PROCESSING, 15 February 2004 (2004-02-15), pages 168-171, XP019002580 Seoul, Korea * the whole document * | 1-10 | |
| D,A | MIKHEEV A ET AL: "Named entity recognition without gazetteers" PROCEEDINGS OF THE MEETING OF THE EUROPEAN CHAPTER OF THE ASSOCIATION OF COMPUTATIONAL LINGUISTICS, XX, XX, 8 June 1999 (1999-06-08), pages 1-8, XP002381145 * the whole document * | 1-10 | |
| A | HALL P A V ET AL: "APPROXIMATE STRING MATCHING" ACM COMPUTING SURVEYS, NEW YORK, NY, US, vol. 12, no. 4, December 1980 (1980-12), pages 381-402, XP000747617 ISSN: 0360-0300 Section 3.2.1 | 7-9 | TECHNICAL FIELDS SEARCHED (IPC) |

The present search report has been drawn up for all claims

| Place of search | Date of completion of the search | Examiner |
|---|---|---|
| The Hague | 14 May 2007 | Alecu, Teodor Iulian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 07 10 4561

This annex lists the patent family members relating to the patent documents cited in the above-mentioned European search report.
The members are as contained in the European Patent Office EDP file on
The European Patent Office is in no way liable for these particulars which are merely given for the purpose of information.

14-05-2007

| Patent document cited in search report | | Publication date | Patent family member(s) | | Publication date |
|---|---|---|---|---|---|
| US 2004117192 | A1 | 17-06-2004 | WO<br>DE<br>EP<br>JP | 02099737 A1<br>10126835 A1<br>1402462 A1<br>2004533069 T | 12-12-2002<br>12-12-2002<br>31-03-2004<br>28-10-2004 |
| WO 9738394 | A | 16-10-1997 | EP<br>JP | 0891599 A1<br>2000508100 T | 20-01-1999<br>27-06-2000 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004117192 A1

- WO 9738394 A

**Non-patent literature cited in the description**

- A Statistical Profile of the Named Entity Task. **D. PALMER ; D. DAY.** Proceedings of the Fifth Conference on Applied Natural Language Processing. 31 March 1997
- Named Entity Recognition without Gazetteers. **ANDREI MIKHEEV ; MARC MOENS ; CLAIRE GROVER.** Proceedings of EACL'99. 1999, 1-8

- Neural network-based proper names extraction in fax images. **AZZABOU N et al.** PROCEEDINGS OF THE 17TH INTERNATIONAL CONFERENCE ON PATTERN RECOGNITION. IEEE, 23 August 2004, vol. 1
- **GRZEGORZ KONDRAK.** Identification of Confusable Drug Names: A new Approach and Evaluation Methodology. *proceedings of COLING,* 2004